# EUROPEAN PATENT APPLICATION

(11) **EP 1 659 009 A2**
(43) Date of publication of application: **24.05.2006**
(21) Application number: 05257124.7
(22) Date of filing: 18.11.2005
(51) Int. Cl.: B60G 21/055, F16F 1/16

(54) **Integrated stabilizer bar bushing and strap**

(30) Priority: 18.11.2004 US 992162
(71) Applicant: Meritor Suspension Systems Company, U.S., Troy, Michigan 48084 (US)
(72) Inventor: Fader, Joseph A., Brighton Michigan 48114 (US); Kleckner, Mark Allen, Lake Orion Michigan 48362 (US); Bechard, Maurice A., Tupperville Ontario N0P 2M0 (CA); Yue, Stephen, Montreal Quebec H4A 3H3 (CA); Lopes, Luiz G. Jr., Canton Michigan 48187 (US); Elders, William James, Chatham Ontario N7M 5P4 (CA); Sowinski, Timothy James, Chatham Ontario N7L 2T4 (CA); Medeiros, Leo, Guelph Ontario N1G 1P4 (CA); Kiousis, Pete Nick, Birmingham Michigan 48009 (US)
(74) Representative: Jones, John Bryn

(57) **Abstract**

A suspension assembly (10) includes an inventive bushing having an integrated bushing and strap (18) supporting a stabilizer bar (14). The bushing (18) includes a body (26) having a hole (25) for receiving the stabilizer bar. A base of the body may include a cut (27) so that the bushing can be spread apart to insert the stabilizer bar through the cut and into the hole. The bushing includes a shell (28) around the exterior of the body that provides legs (20) which are used to secure the inventive bushing to the vehicle frame (12). The shell includes one or more layers of cords (30) similar to the steel belting of a tire to provide structural integrity to the shell. Layers of cords can be arranged at angles relative to one another to provide increased lateral stability.

## Description

### BACKGROUND OF THE INVENTION

This invention relates to an integrated stabilizer bushing and strap for securing a stabilizer bar to a vehicle.

Stabilizer bars are mounted on a vehicle frame between opposing lateral suspension components such as control arms. The stabilizer bar provides lateral stability to the vehicle during turning maneuvers.

A center portion of the stabilizer bar is typically secured to a vehicle using a rubber bushing mounted on the stabilizer bar. The bushing is received in a generally U-shaped strap that is secured to the vehicle frame by fasteners. The bushing may have a cut in it that extends to a bushing hole for receiving the stabilizer bar, so that the bushing may be installed over the center portion of the stabilizer bar without having to slide the bushing to the center portion starting from the end of the bar. Once the bushing is installed onto the stabilizer bar, the strap is secured over the bushing.

The strap axially constrains the bushing, however, occasionally the bushing will come out of the strap during vehicle operation. Therefore, it is desirable to provide a bushing and strap arrangement in which the bushing will not move relative to the strap. Moreover, it is desirable to provide a bushing and strap arrangement in which the bushing and strap may be installed simultaneously on the stabilizer bar. It is further desirable to provide a lighter strap to reduce the overall weight of the stabilizer bar assembly.

### SUMMARY OF THE INVENTION

This invention provides a suspension assembly including an integrated stabilizer bar bushing and strap supporting a stabilizer bar. The inventive bushing includes a body having a hole for receiving the stabilizer bar. A base of the body may include a cut so that the bushing can be spread apart to insert the stabilizer through the cut and into the hole. The bushing includes a shell extending around, and molded as a single unit with, the exterior of the body, in one example embodiment. The shell provides legs, which are used to secure the bushing to the vehicle frame. The shell can be made similar to the steel belting of a tire and include one or more layers of cords to provide structural integrity to the shell. The layers of cords can be arranged at angles relative to one another to provide increased lateral stability. Notably, the shell can be made in other manners to provide the reinforcing fibers. Thus, for purposes of this application "cords" should be interpreted to broadly mean any type of reinforcement fiber.

Accordingly, the present invention provides a bushing and strap arrangement in which the bushing will not move relative to the strap since the two typically separate components are integrated.

These and other features of the present invention can be best understood from the following specification and drawings, the following of which is a brief description.

### BRIEF DESCRIPTION OF THE DRAWINGS

Figure 1 is an elevational view of the inventive suspension assembly using the inventive bushing and strap.
Figure 2A is a side elevational view of the inventive bushing and strap with a cut.
Figure 2B is a side elevational view of the inventive bushing and strap without a cut.
Figure 3 is a cross-sectional view of the inventive bushing and strap taken along lines 3-3 of Figure 2A.
Figure 4 is a cross-sectional view of the inventive bushing and strap shown along lines 4-4 in Figure 2A.

### DETAILED DESCRIPTION OF THE PREFERRED EMBODIMENT

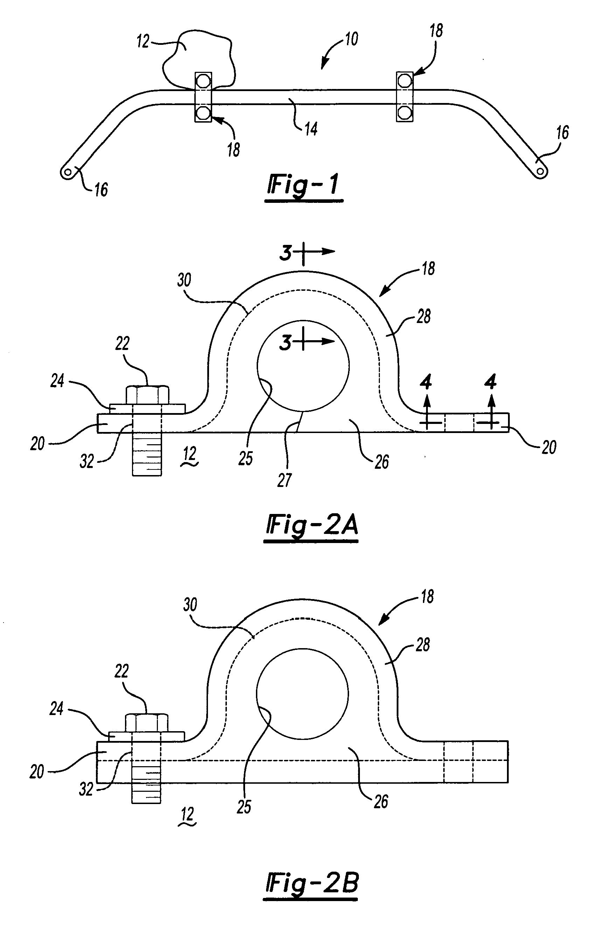

An inventive suspension assembly 10 is shown in Figure 1. A stabilizer bar 14 is secured to a vehicle frame 12 using an inventive bushing and strap 18. As illustrated two bushings and straps 18 are utilized. As is well known in the art, opposing ends 16 of the stabilizer bar 14 are secured to opposing suspension components on either side of the vehicle, such as left and right control arms.

Referring to Figures 2A and 2B, the inventive bushing and strap 18 (subsequently referred to as "bushing 18") integrates the two components to provide a lightweight assembly in which the bushing and strap cannot move relative to one another. The bushing 18 includes a body 26, which may be manufactured from an elastomeric material such as rubber. The body 26 has a hole 25 for supporting a portion of the stabilizer bar 14. As shown in Figure 2A, a base of the body 26 may include a cut 27 so that the bushing 18 may be opened at the cut 27 to insert the stabilizer bar 14 into the hole 25. Alternatively, the cut 27 may be omitted (Figure 2B) and the base may be reinforced in the manner discussed below relative to the shell 28.

The bushing 18 includes a shell 28 on the exterior of the body 26. The shell 28 is a reinforced portion of the body 26 used to secure the bushing 18 to the vehicle frame 12, replacing the conventional, separate metal strap. The shell 28 provides legs 20 having apertures 32. In Figure 2B, the shell 28 also extends between the legs 20. Fasteners 22 are located within the apertures 32 to secure the bushing 18 to the vehicle frame 12. Washers 24 may be arranged between the fastener heads and the legs 20 so that the clamping load may be distributed over a larger portion of the legs 20. Otherwise, the head of the fastener 22 may pull through the aperture 32. Alternatively, a special fastener having an enlarged head may be used.

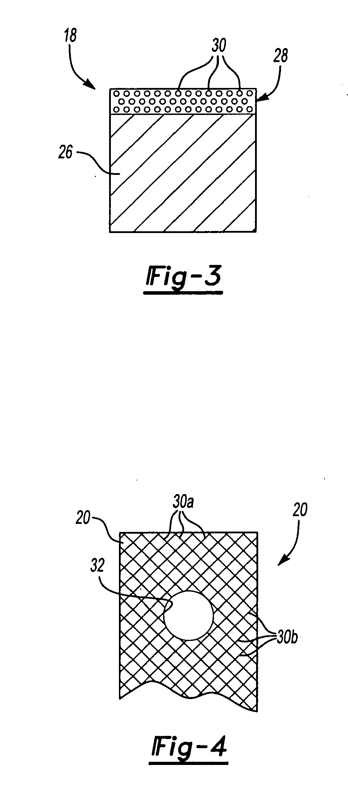

The shell 28 is similar to a steel belted tire in that it contains one or more layers of cords 30 arranged in desired directions to provide stability to the inventive bushing 18. For example, as shown in Figure 4, layers 30A and 30B are arranged at angles relative to one another to minimize deflection of the bushing 18 in the lateral direction. That is, the cords are not all arranged parallel. The cords 30 are embedded in the elastomeric or rubber material making up the body 26 and shell 28, as shown in Figure 3, and may be metal or synthetic.

Since a rigid strap is not used, and the shell 28 is flexible, the bushing 18 may be opened at the cut 27 and installed onto the stabilizer bar 14 as a single unit, which reduces costs associated with handling. The stabilizer bar 14 may then be installed onto the vehicle frame 12.

In one embodiment the shell 28 is molded around the body 26, with the cords 30 being embedded by any appropriate technique. It may also be possible to mold the shell 28 and body 26 simultaneously.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A suspension assembly (10) comprising:
a stabilizer bar (14);
a bushing (18) having a hole (25) with said stabilizer bar (14) arranged in said hole (25), said bushing (18) having a reinforced portion (28) spaced from said hole (25) and forming legs (20) opposing one another, said legs (20) having apertures (32) for receiving fasteners (22) to secure said bushing (18) to a vehicle frame (12).

2. The assembly according to claim 1, wherein said bushing includes a body having said hole, and said reinforced portion is formed by a shell on an exterior portion of said body, said shell including a plurality of cords.

3. The assembly according to claim 2, wherein said body is rubber and said shell is formed of rubber and said plurality of cords.

4. The assembly according to claim 2 or 3, wherein some of said plurality of cords extend at non-parallel angles relative to others of said plurality of cords.

5. The assembly according to any preceding claim, wherein said bushing includes a cut extending from a base spaced from said reinforced portion to said hole.

6. The assembly according to any preceding claim, comprising one of said fasteners received in each of said apertures with a washer arranged between a portion of said fasteners and said legs.

7. A stabilizer bar bushing comprising:
a body having a hole and a reinforced portion formed by a shell on an exterior portion of said body, said shell including a plurality of cords.

8. The stabilizer bar bushing according to claim 7, wherein said body is rubber and said shell is formed of rubber and said plurality of cords.

9. The stabilizer bar bushing according to claim 7 or 8, wherein said body includes a cut extending from a base spaced from said reinforced portion to said hole.

10. The stabilizer bar bushing according to claim 7, 8 or 9, wherein some of said plurality of cords extend at a non-parallel angle relative to others of said plurality of cords.

11. A method of installing a stabilizer bar comprising the steps of:
(a) providing a bushing with a body having a base and a hole with a cut extending from the base to the hole, and a reinforced portion spaced from the hole and providing opposed legs;
(b) opening the bushing at the cut to expose the hole; and
(c) inserting a stabilizer bar through the cut into the hole.

12. The method according to claim 11, comprising (d) securing the opposed legs to a vehicle frame.

13. The method according to claim 11 or 12, wherein step (a) includes the step of molding the body and reinforcement portion together.

14. A method of installing a stabilizer bar comprising the steps of:
(a) providing a bushing having a base with a reinforced portion spaced from a hole in the base, the reinforcement portion providing opposed legs;
(b) inserting one end of a stabilizer bar through the hole; and
(c) sliding the bushing along a length of the stabilizer bar until reaching a desired position.

15. The method according to claim 14, comprising the step (d) of securing the opposed legs to a vehicle frame.
